(19) Europäisches Patentamt / European Patent Office / Office européen des brevets

(11) **EP 3 510 462 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
***G05D 1/02*** *(2020.01)*

(21) Anmeldenummer: **17740623.8**

(22) Anmeldetag: **14.07.2017**

(86) Internationale Anmeldenummer:
**PCT/EP2017/025211**

(87) Internationale Veröffentlichungsnummer:
**WO 2018/046135 (15.03.2018 Gazette 2018/11)**

(54) **SYSTEM UND VERFAHREN ZUM FÜHREN EINES FAHRZEUGS**

SYSTEM AND METHOD FOR GUIDING A VEHICLE

SYSTÈME ET PROCÉDÉ POUR CONDUIRE UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2016 DE 102016010879**

(43) Veröffentlichungstag der Anmeldung:
**17.07.2019 Patentblatt 2019/29**

(73) Patentinhaber: **SEW-EURODRIVE GmbH & Co. KG
76646 Bruchsal (DE)**

(72) Erfinder:
• **SCHMIDT, Josef
76676 Graben-Neudorf (DE)**
• **BÖCKLE, Jürgen
76646 Bruchsal (DE)**
• **HUA, Zhidong
76646 Bruchsal (DE)**
• **SCHÄFER, Thomas
76689 Neuthard (DE)**
• **WANJEK, Andreas
68753 Waghäusel (DE)**

(56) Entgegenhaltungen:
**EP-A1- 0 614 134       WO-A1-91/09356
DE-A1- 2 445 001       DE-A1- 2 506 961
DE-A1- 4 312 434       US-A- 3 008 532
US-A1- 2003 106 731**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System und ein Verfahren zum Betreiben eines Fahrzeugs.

Aus der DE 10 2005 008 555 A1 sind eine Anlage und ein Verfahren zur Bestimmung einer Position bekannt.

Aus der WO 91/09 356 A1 ist ein Verfahren zur Navigation unbemannter Fahrzeuge bekannt.

Aus der DE 100 49 402 A1 ist ein Verfahren zur Lageermittlung von Transportmitteln bekannt.

**Aus der** US 3 2008 532 A **ist als nächstliegender Stand der Technik ein System zur Bestimmung der Fahrtrichtung eines Fahrzeugs bekannt.**

Der Erfindung liegt daher die Aufgabe zugrunde, ein System zur Bestimmung der Fahrtrichtung eines Fahrzeugs weiterzubilden, wobei der Umweltschutz verbessert werden soll.

**Erfindungsgemäß wird die Aufgabe bei dem System zur Bestimmung der Fahrtrichtung eines Fahrzeugs nach den in Anspruch 8 angegebenen Merkmalen und bei dem Verfahren nach den in Anspruch 1 angegebenen Merkmalen gelöst.**

Wichtige Merkmale der Erfindung bei dem Verfahren zum Betreiben eines Fahrzeugs, insbesondere zur Bestimmung der Fahrtrichtung des Fahrzeugs, insbesondere mittels eines Systems zur Bestimmung der Fahrtrichtung eines Fahrzeugs wie zuvor beschrieben beziehungsweise nach mindestens einem der auf das System bezogenen Ansprüche, wobei das Fahrzeug auf einem Betonboden verfahrbar angeordnet ist, wobei der Betonboden zumindest einen Armierungsstab aufweist, wobei das Fahrzeug zumindest einen ersten Sensor und einen zweiten Sensor einer ersten Sensorgruppe aufweist, die entlang einer ersten Referenzlinie um einen Abstand $a_1$ beabstandet voneinander angeordnet sind, sind, dass das Fahrzeug mit einer Geschwindigkeit v über den Armierungsstab fährt,

wobei der erste Sensor den Armierungsstab zu einem ersten Zeitpunkt $t_1$ erfasst,

wobei der zweite Sensor den Armierungsstab zu einem zweiten Zeitpunkt $t_2$, insbesondere zeitlich nach dem ersten Zeitpunkt $t_1$, erfasst,

wobei die Zeitdifferenz $t_{\alpha 1}$ zwischen dem ersten Zeitpunkt $t_1$ und dem zweiten Zeitpunkt $t_2$ bestimmt wird,

wobei aus der Zeitdifferenz $t_{\alpha 1}$, der Geschwindigkeit v und dem Abstand $a_1$ ein Winkel $\alpha_1$ bestimmt wird, der den Winkel zwischen der Fahrtrichtung des Fahrzeugs und der Erstreckungsrichtung des Armierungsstabes zum ersten und/oder zweiten Zeitpunkt angibt.

**Diese Bestimmung wird erfindungsgemäß nur vorgenommen, wenn die Sensoren den Armierungsstab auch erfassen, also ihn queren, und somit entsprechende Signale erzeugen. Ansonsten gilt Die Fahrtrichtung als parallel zum Armierungsstab gilt oder ihr ist ein vorgegebener Richtungswinkelwert zugeordnet.**

Von Vorteil ist dabei, dass die Fahrtrichtung des Fahrzeugs relativ zu dem Armierungsstab bestimmbar ist. Vorteilhafterweise weist der Betonboden einer Fahrbahn, insbesondere einer Fabrikhalle, üblicherweise Armierungsstäbe auf. Somit ist lediglich das Fahrzeug mit Sensoren und einem Auswertemittel zur Auswertung der Signale des Armierungsstabes auszurüsten. Die Bestimmung der Fahrtrichtung ist also mit geringem Materialaufwand ausführbar. Der Umweltschutz ist verbessert.

Bei einer vorteilhaften Ausgestaltung fährt das Fahrzeug mit konstanter Geschwindigkeit v, wobei der Winkel $\alpha_1$ folgendermaßen berechnet wird:

$$\alpha_1 = \arctan \frac{v \cdot t_{\alpha 1}}{a_1}$$

Von Vorteil ist dabei, dass die Fahrtrichtung in einfacher Art und Weise mittels des Auswertemittels bestimmbar ist.

Bei einer vorteilhaften Ausgestaltung weist das Fahrzeug eine zweite Sensorgruppe auf, wobei die zweite Sensorgruppe zumindest zwei Sensoren aufweist, die entlang einer zweiten Referenzlinie um einen Abstand $a_2$ beabstandet voneinander angeordnet sind, wobei die erste Sensorgruppe und die zweite Sensorgruppe derart angeordnet sind, dass die erste Referenzlinie und die zweite Referenzlinie parallel zueinander angeordnet sind und um den Abstand x beabstandet voneinander sind, wobei ein erster Sensor der zweiten Sensorgruppe den Armierungsstab zu einem dritten Zeitpunkt $t_3$ zeitlich nach dem zweiten Zeitpunkt $t_2$ erfasst, wobei ein zweiter Sensor der zweiten Sensorgruppe den Armierungsstab zu einem vierten Zeitpunkt $t_4$, insbesondere zeitlich nach dem dritten Zeitpunkt $t_3$, erfasst, wobei die Zeitdifferenz $t_{\alpha 2}$ zwischen dem dritten Zeitpunkt $t_3$ und dem vierten Zeitpunkt $t_4$ bestimmt wird, wobei aus der Zeitdifferenz $t_{\alpha 2}$, der Geschwindigkeit v und dem Abstand $a_2$ ein Winkel $\alpha_2$ bestimmt wird, der den Winkel zwischen der Fahrtrichtung des Fahrzeugs und der Erstreckungsrichtung des Armierungsstabes zum dritten und/oder vierten Zeitpunkt angibt. Von Vorteil ist dabei, dass eine Richtungsabweichung bei der Fahrtrichtung erkennbar ist, indem die mit den Sensoren der ersten Sensorgruppe bestimmte Fahrtrichtung und die mit den Sensoren der zweiten Sensorgruppe bestimmte Fahrtrichtung verglichen wird. Das Fahrzeug ist dadurch wieder auf die gewünschte Fahrtrichtung korrigierbar.

Bei einer vorteilhaften Ausgestaltung fährt das Fahrzeug mit konstanter Geschwindigkeit v, wobei der Winkel $\alpha_2$ folgendermaßen berechnet wird:

$$\alpha_2 = \arctan \frac{v \cdot t_{\alpha 2}}{a_2}$$

Von Vorteil ist dabei, dass die Fahrtrichtung in einfacher Art und Weise mittels des Auswertemittels bestimmbar ist.

Bei einer vorteilhaften Ausgestaltung verwendet das Fahrzeug die Differenz der Winkel $\alpha_1$ und $\alpha_2$ zur Steuerung des Fahrzeugs, wobei die Differenz der Winkel $\alpha_1$ und $\alpha_2$ eine Richtungsänderung der Fahrtrichtung während der zurückgelegten Strecke $x$ angibt, also einen Lenkwinkel, insbesondere

- wobei mittels eines Reglers des Fahrzeugs der so bestimmte Lenkwinkel auf einen Sollwert hin geregelt wird, indem ein Lenkantrieb des Fahrzeugs entsprechend gestellt wird,
und/oder
- der bestimmte Lenkwinkel auf unzulässige Überschreitung eines vorgebbaren Grenzwertes überwacht wird.
  Von Vorteil dabei ist also, dass der Lenkwinkel auf unzulässig große Werte hin überwacht wird und/oder dass er zur Lenkung des Fahrzeugs verwendbar ist.

Bei einer vorteilhaften Ausgestaltung wird die Zeitspanne $\Delta t$ mittels der Geschwindigkeit v und des Abstands $x$ zwischen den Sensorgruppen folgendermaßen berechnet:

$$\Delta t = \frac{x}{v},$$

wobei

$$t_1 - t_3 - \Delta t \leq S,$$

wobei S ein vorgebbarer Schwellwert ist, insbesondere wobei der Schwellwert betragsmäßig weniger als ein Fünftel oder weniger als ein Zwanzigstel der Zeitspanne $\Delta t$ beträgt.

Von Vorteil ist dabei, dass ein Detektionssignal, das mittels eines Sensors der zweiten Sensorgruppe erfasst wurde, in einfacher Art und Weise dem Detektionssignal zuordenbar ist, das von einem Sensor der ersten Sensorgruppe erfasst wurde, indem die Zeit zwischen den beiden Signalen mit der Zeitspanne $\Delta t$ verglichen wird.

Insbesondere ist bei einer Anlage mit einer Vielzahl von voneinander beabstandeten, parallel angeordneten Armierungsstäben mittels geeigneter Vorgabe des Schwellwertes verhinderbar, dass die vordere und die hintere Sensorgruppe Signale nicht denselben Armierungsstab detektieren.

Bei einer vorteilhaften Ausgestaltung werden zur Bestimmung der Geschwindigkeit des Fahrzeugs entlang einer Fahrstrecke die folgenden zeitlich aufeinander folgenden Verfahrensschritte ausgeführt:

wobei in einem ersten Verfahrensschritt das Fahrzeug eine Referenzfahrt mit konstanter Geschwindigkeit entlang der Fahrstrecke ausführt, wobei einer der Sensoren entlang der Fahrstrecke Messpunkte aufnimmt, wobei jeder Messpunkt einer Position auf der Fahrstrecke ein Signal einer Anordnung von Armierungsstäben im Betonboden zuordnet,

wobei in einem zweiten Verfahrensschritt aus den während der Referenzfahrt ermittelten Messpunkten ein Referenzprofil der Fahrstrecke bestimmt wird,

wobei in einem dritten Verfahrensschritt das Fahrzeug entlang der Fahrstrecke fährt und mittels des während der Referenzfahrt verwendeten Sensors weitere Messpunkte aufnimmt,

wobei in einem vierten Verfahrensschritt aus den weiteren Messpunkten ein Profilabschnitt bestimmt wird,

wobei in einem fünften Verfahrensschritt der Profilabschnitt einem Abschnitt des Referenzprofils eindeutig zugeordnet wird, insbesondere mittels eines Korrelationsverfahrens,

wobei in einem sechsten Verfahrensschritt mittels des dem Referenzprofil zugeordneten Profilabschnitts dem Fahrzeug Positionen auf der Fahrstrecke eindeutig zugeordnet werden,

wobei in einem siebten Verfahrensschritt aus den Positionen auf der Fahrstrecke und der Zeitspanne zwischen den Messpunkten dieser Positionen die Geschwindigkeit des Fahrzeugs (1) bestimmt wird.

Von Vorteil ist dabei, dass die Geschwindigkeit des Fahrzeugs redundant bestimmbar ist mittels des Geschwindigkeitssensors und des Sensors. Somit ist die Messgenauigkeit verbessert.

Vorteilhafterweise ist der Geschwindigkeitssensor verzichtbar. Somit ist der Umweltschutz verbessert.

Wichtige Merkmale der Erfindung bei dem System zur Bestimmung der Fahrtrichtung eines Fahrzeugs, sind dass

das System das Fahrzeug und einen Betonboden, aufweisend zumindest einen Armierungsstab, aufweist,
wobei das Fahrzeug verfahrbar auf dem Betonboden angeordnet ist,
wobei das Fahrzeug ein Auswertemittel und eine erste Sensorgruppe, aufweisend zumindest zwei Sensoren, aufweist,
wobei die Sensoren entlang einer ersten Referenzlinie beabstandet voneinander angeordnet sind,
wobei die Sensoren zur Erfassung des Armierungsstabes eingerichtet sind,

wobei das Auswertemittel mit den Sensoren verbunden ist und zur Bestimmung der Fahrtrichtung aus den Signalen der Sensoren eingerichtet ist.

Von Vorteil ist dabei, dass die Fahrtrichtung des Fahrzeugs relativ zu dem Armierungsstab bestimmbar ist. Vorteilhafterweise weist der Betonboden einer Fahrbahn, insbesondere einer Fabrikhalle, üblicherweise Armierungsstäbe auf. Somit ist lediglich das Fahrzeug mit den Sensoren und dem Auswertemittel auszurüsten. Die Bestimmung der Fahrtrichtung ist also mit geringem Materialaufwand ausführbar. Der Umweltschutz ist verbessert.

Bei einer vorteilhaften Ausgestaltung weist das Fahrzeug eine zweite Sensorgruppe, aufweisend zumindest zwei Sensoren, auf, wobei die Sensoren der zweiten Sensorgruppe entlang einer zweiten Referenzlinie beabstandet voneinander angeordnet sind, wobei die erste Referenzlinie und die zweite Referenzlinie beabstandet voneinander und parallel zueinander angeordnet sind, wobei die Sensoren der zweiten Sensorgruppe zur Erfassung des Armierungsstabes eingerichtet sind, wobei das Auswertemittel mit den Sensoren der zweiten Sensorgruppe verbunden ist und zur Bestimmung der Fahrtrichtung aus den Signalen der Sensoren der zweiten Sensorgruppe eingerichtet ist. Von Vorteil ist dabei, dass eine Richtungsabweichung bei der Fahrtrichtung erkennbar ist, indem die mit den Sensoren der ersten Sensorgruppe bestimmte Fahrtrichtung und die mit den Sensoren der zweiten Sensorgruppe bestimmte Fahrtrichtung verglichen werden. Das Fahrzeug ist dadurch wieder auf die gewünschte Fahrtrichtung korrigierbar.

Bei einer vorteilhaften Ausgestaltung sind die Sensoren an einem Fahrzeugboden des Fahrzeugs angeordnet. Von Vorteil ist dabei, dass der Abstand zwischen dem Fahrzeug und dem Betonboden kleiner ist, als bei einer Anordnung des Sensors an anderen Positionen auf dem Fahrzeug. Somit ist ein gutes Signal-Rausch-Verhältnis bei der Bestimmung des Signals von dem Armierungsstab erreichbar. Vorteilhafterweise ist zwischen dem Sensor und dem Betonboden ausschließlich Luft angeordnet.

Bei einer vorteilhaften Ausgestaltung sind die Sensoren Radarsensoren und/oder induktive Sensoren, die dazu eingerichtet sind, die Dicke und/oder die Dichte und/oder die Tiefe des Armierungsstabes im Betonboden zu bestimmen. Von Vorteil ist dabei, dass mittels des Sensors ein charakteristisches Referenzprofil der Armierung entlang einer Fahrstrecke bestimmbar ist.

Bei einer vorteilhaften Ausgestaltung weist das Fahrzeug eine Fahrzeugsteuerung auf, insbesondere wobei das Fahrzeug als fahrerloses Transportfahrzeug ausgeführt ist, wobei die Fahrzeugsteuerung mit dem Auswertemittel verbunden ist. Von Vorteil ist dabei, dass die Signale des Armierungsstabes von dem Fahrzeug auswertbar sind und daraus die Fahrtrichtung des Fahrzeugs von dem Fahrzeug selbst bestimmbar ist und diese Fahrtrichtung zur autonomen Steuerung des Fahrzeugs verwendbar ist.

Bei einer vorteilhaften Ausgestaltung weist das Auswertemittel eine Recheneinheit auf, die zur Berechnung von trigonometrischen Funktionen eingerichtet ist. Von Vorteil ist dabei, dass die Auswertung der Signale des Armierungsstabes in einfacher Art und Weise von dem Fahrzeug mittels des Auswertemittels ausführbar ist.

Bei einer vorteilhaften Ausgestaltung weist das Auswertemittel ein Zeitmessmittel auf, das zur Bestimmung der Zeit zwischen zwei aufeinander folgenden Zeitpunkten der Erfassung des Armierungsstabs eingerichtet ist. Von Vorteil ist dabei, dass der Armierungsstab, der mittels eines Sensors der zweiten Sensorgruppe erfasst wurde, in einfacher Art und Weise demjenigen Detektionssignal zuordenbar ist, das von einem Sensor der ersten Sensorgruppe erfasst wurde, in dem die Zeit zwischen den beiden Signalen mit der Zeitspanne $\Delta t$ verglichen wird, die mittels des Abstands der Sensorgruppen und der Geschwindigkeit des Fahrzeugs bestimmbar ist.

Bei einer vorteilhaften Ausgestaltung weist das System einen Geschwindigkeitssensor auf zur Bestimmung der Geschwindigkeit $v$ des Fahrzeugs in Fahrtrichtung. Von Vorteil ist dabei, dass Geschwindigkeitsabweichungen in einfacher Art und Weise detektierbar sind.

Bei einer vorteilhaften Ausgestaltung weist der Betonboden eine Vielzahl von Armierungsstäben auf. Von Vorteil ist dabei, dass mittels der Armierungsstäbe an verschiedenen Positionen auf dem Betonboden die Fahrtrichtung des Fahrzeugs bestimmbar ist.

Vorteilhafterweise sind die Armierungsstäbe derart in dem Betonboden verteilt anordenbar, dass das Fahrzeug jederzeit einen Armierungsstab mit einem Sensor der ersten Sensorgruppe und/oder einem Sensor der zweiten Sensorgruppe detektiert.

Zur Unterscheidung der Armierungsstäbe wird die Zeitspanne $\Delta t$ berechnet, die zwischen dem Zeitpunkt, zu dem ein Sensor der ersten Sensorgruppe einen Armierungsstab detektiert, und dem Zeitpunkt, zu dem ein Sensor der zweiten Sensorgruppe denselben Armierungsstab detektiert, vergeht.

Bei einer vorteilhaften Ausgestaltung sind die Armierungsstäbe parallel zueinander und/oder als Gitter angeordnet. Von Vorteil ist dabei, dass zwei Sensoren für jede Sensorgruppe ausreichend sind, um die Fahrtrichtung des Fahrzeugs zu bestimmen.

Bei einer vorteilhaften Ausgestaltung weist jede Sensorgruppe eine Vielzahl von Sensoren auf, wobei das Auswertemittel zur Auswertung der Signale der Sensoren der ersten und zweiten Sensorgruppe eingerichtet ist. Von Vorteil ist dabei, dass die Messgenauigkeit verbessert ist. Der Winkel zu dem Armierungsstab ist mittels verschiedenen Sensorpaaren einer Sensorgruppe berechenbar und ein Mittelwert der Winkel ist bestimmbar. Somit ist die Messgenauigkeit verbessert.

Bei einer vorteilhaften Ausgestaltung ist das Auswertemittel zur Auswahl von einzelnen Sensoren aus einer Sensorgruppe für die Bestimmung der Fahrtrichtung des Fahrzeugs eingerichtet. Von Vorteil ist dabei, dass ein Sensor, der permanent das Signal eines den Armierungsstab kreuzenden Armierungsstabes empfängt, von dem Auswertemittel ignorierbar ist. Somit ist die Messgenauigkeit verbessert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist ein Fahrzeug 1 eines erfindungsgemäßen Systems zur Bestimmung der Fahrtrichtung eines Fahrzeugs in Draufsicht schematisch gezeichnet.

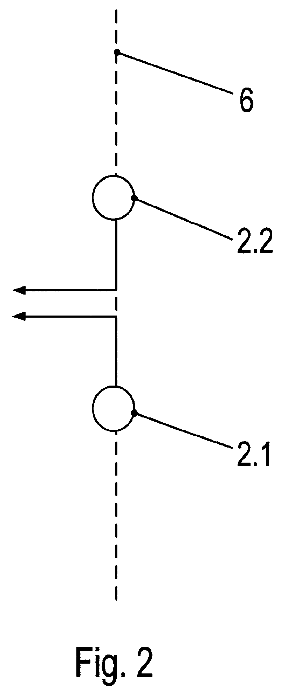

Figur 2 zeigt zwei Sensoren (2.1, 2.2) einer Sensorgruppe des Fahrzeugs 1 in Draufsicht, die auf einer Referenzlinie 6 angeordnet sind.

In Figur 3 ist ein Armierungsstab 7 einer Armierung eines Betonbodens des erfindungsgemäßen Systems und dessen Lage relativ zu der Referenzlinie 6 schematisch gezeichnet.

In Figur 4 ist ein erstes Anwendungsbeispiel des erfindungsgemäßen Systems schematisch dargestellt, wobei das Fahrzeug 1 auf dem Armierungsstäbe 7 aufweisenden Betonboden in Fahrtrichtung 9 fährt, wobei der Betonboden transparent dargestellt ist.

Figur 5 zeigt Messpunkte der Sensoren (2.1, 2.2, 3.1, 3.2) beim ersten Anwendungsbeispiel als Funktion der Zeit t.

In Figur 6 ist ein zweites Anwendungsbeispiel des erfindungsgemäßen Systems schematisch dargestellt, wobei das Fahrzeug 1 auf dem Armierungsstäbe 7 aufweisenden Betonboden in Fahrtrichtung 9 fährt, wobei der Betonboden transparent dargestellt ist.

Figur 7 zeigt Messpunkte der Sensoren (2.1, 2.2, 3.1, 3.2) beim ersten Anwendungsbeispiel als Funktion der Zeit t.

In Figur 8 sind die in einer Zeit $t_{\alpha 1}$ zurückgelegte Strecke b und der Abstand $a_1$ zwischen zwei Sensoren (2.1, 2.2) einer ersten Sensorgruppe und ein daraus resultierender Winkel $\alpha_1$ gezeichnet.

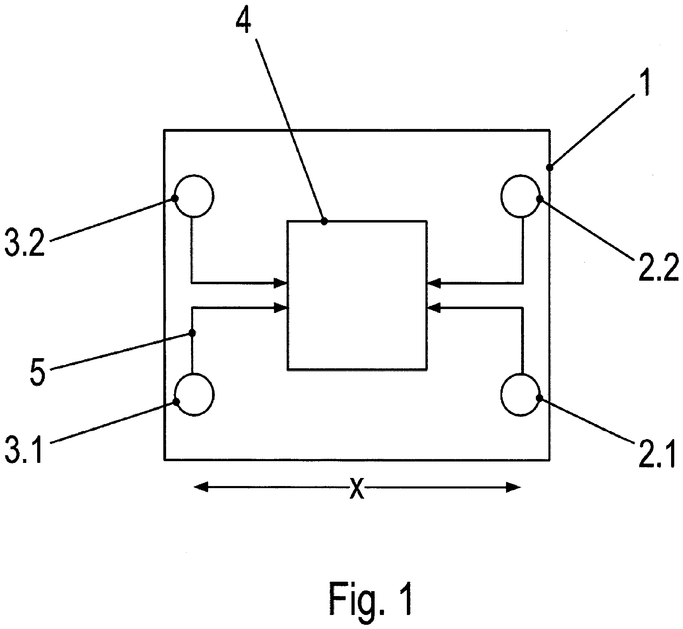

Das in Figur 1 dargestellte Fahrzeug 1 weist eine erste und eine zweite Sensorgruppe zur Erfassung der Armierung im Betonboden auf, wobei jede Sensorgruppe zumindest zwei

Sensoren (2.1, 2.2, 3.1, 3.2) aufweist, die entlang einer jeweiligen Referenzlinie 6 beabstandet voneinander angeordnet sind. Die Sensoren (2.1, 2.2, 3.1, 3.2) sind derart am Fahrzeug 1 angeordnet, dass die Referenzlinien der ersten und zweiten Sensorgruppe jeweils parallel angeordnet sind. Die Sensorgruppen sind um einen Abstand x beabstandet voneinander angeordnet.

Vorzugsweise sind die Sensoren (2.1, 2.2, 3.1, 3.2) als induktive Sensoren und/oder Radarsensoren ausgeführt. Vorzugsweise sind die Sensoren (2.1, 2.2, 3.1, 3.2) am Fahrzeugboden des Fahrzeugs 1 angeordnet und zum Betonboden hin ausgerichtet.

Vorteilhafterweise sind die Referenzlinien der ersten und zweiten Sensorgruppe jeweils quer zur Fahrtrichtung 9 des Fahrzeugs 1 angeordnet.

Das Fahrzeug 1 weist ein Auswertemittel 4 auf, wobei das Auswertemittel 4 mit den Sensoren (2.1, 2.2, 3.1, 3.2) der Sensorgruppen verbunden ist, insbesondere mittels eines Verbindungsmittels 5. Das Auswertemittel 4 ist zur Auswertung der Signale von den Sensoren (2.1, 2.2, 3.1, 3.2) eingerichtet. Vorzugsweise weist das Auswertemittel 4 eine Recheneinheit auf, die zur Berechnung von trigonometrischen Funktionen eingerichtet ist.

Das Fahrzeug 1 weist einen Geschwindigkeitssensor auf, wobei das Auswertemittel 4 mit dem Geschwindigkeitssensor verbunden ist. Das Auswertemittel 4 ist zur Auswertung der Signale von dem Geschwindigkeitssensor eingerichtet.

Das erfindungsgemäße System zur Bestimmung der Fahrtrichtung eines Fahrzeugs weist das Fahrzeug 1 und den Betonboden auf, wobei das Fahrzeug 1 auf dem Betonboden verfahrbar ist.

Der Betonboden weist die Armierung auf zur Bewehrung des Betonbodens. Die Armierung ist metallisch und weist eine größere Duktilität auf als Beton. Vorzugsweise ist die Armierung aus Stahl, insbesondere Betonstahl, ausgeführt. Als Armierung sind Betonstabstahl und/oder Betonstahlmatten und/oder Betonstahl in Ringen und/oder Bewehrungsdraht und/oder Gitterträger verwendbar. Vorteilhafterweise weist die Armierung Armierungsstäbe 7 auf, die zumindest teilweise geradlinig ausgeführt sind.

Die Armierung im Betonboden ist mittels eines Radarsensors und/oder mittels eines induktiven Sensors detektierbar. Die Intensität I des Signals von der Armierung ist dabei abhängig von der Tiefe der Armierung im Betonboden und von der Dicke der Armierung am Ort der Messung. Beispielsweise bewirkt ein Knotenpunkt von zwei Armierungsstäben 7 ein größeres Signal als ein einzelner Armierungsstab 7.

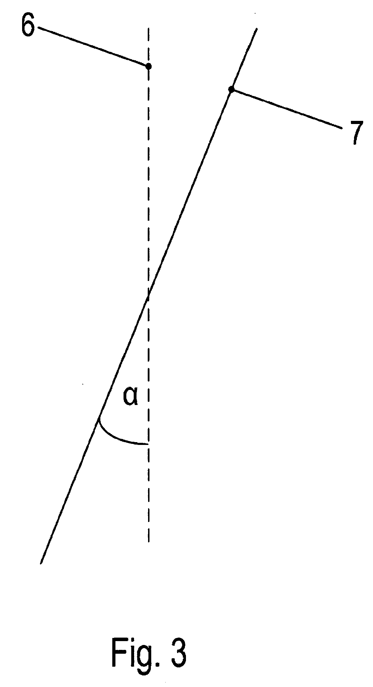

Wie in Figur 3 gezeigt, wird zur Bestimmung der Fahrtrichtung 9 des Fahrzeugs 1 der Winkel $\alpha$ zwischen einem Armierungsstab 7 und einer Referenzlinie 6 bestimmt.

**Solange trotz nicht verschwindender Fahrgeschwindigkeit des Fahrzeugs 1 keine Erfassung eines Armierungsstabs 7 stattfinden, gilt die Fahrtrichtung als parallel zum Armierungsstab 7 oder ist einem anderen vorgegebenen Anfangs-Richtungswinkelwert zugeordnet. Wenn jedoch mittels der Sensoren ein Armierungsstab erfasst wird und somit Signale von den Sensoren erzeugt werden, wird eine Bestimmung des Fahrtrichtungs-Winkels ausgeführt:**

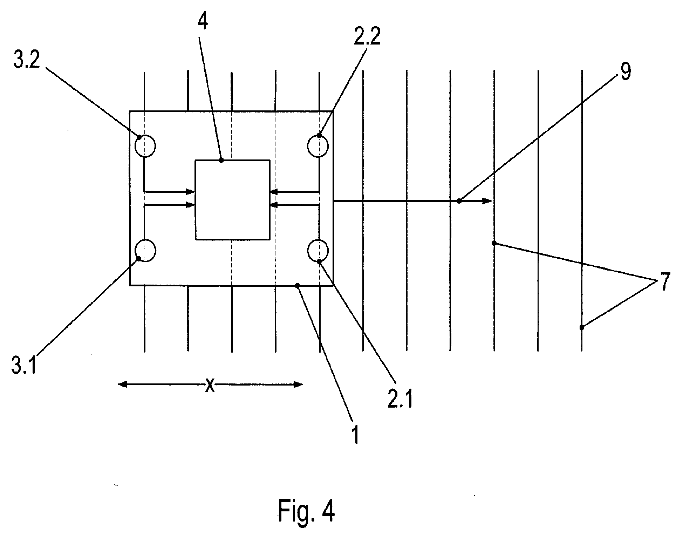

In den Figuren 4 bis 5 ist das erste Anwendungsbeispiel des erfindungsgemäßen Systems gezeigt. Dabei ist das Fahrzeug 1 derart auf dem Betonboden ausgerichtet, dass die Referenzlinien 6 der Sensorgruppen parallel zu einem Armierungsstab 7 angeordnet sind. Der Winkel $\alpha$ ist also gleich 0°. Vorzugsweise weist die Armierung eine Vielzahl von parallel angeordneten Armierungsstäben 7 auf.

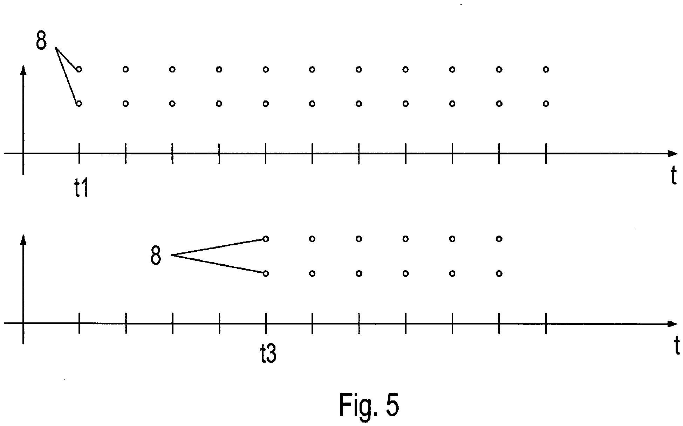

In Figur 5 sind im oberen Diagramm die Messpunkte der ersten Sensorgruppe und im unteren Diagramm sind die Messpunkte der zweiten Sensorgruppe als Funktion der Zeit t dargestellt. Dabei zeigt die jeweilige obere Messreihe die Messpunkte des jeweiligen ersten Sensors (2.1, 3.1) der jeweiligen Sensorgruppe und die untere Messreihe zeigt die jeweiligen Messpunkte des jeweiligen zweiten Sensors (2.2, 3.2) der jeweiligen Sensorgruppe.

Das Fahrzeug 1 fährt in Fahrtrichtung 9 auf dem Betonboden über die Armierungsstäbe 7. Vorteilhafterweise fährt das Fahrzeug mit konstanter Geschwindigkeit v.

Zu einem ersten Zeitpunkt $t_1$ detektieren die Sensoren (2.1, 2.2) der ersten Sensorgruppe zeitgleich einen Armierungsstab 7. Zu einem dritten Zeitpunkt $t_3$ detektieren die Sensoren (3.1, 3.2) der zweiten Sensorgruppe zeitgleich den Armierungsstab 7.

Vorzugsweise erfasst der Geschwindigkeitssensor die Geschwindigkeit v des Fahrzeugs 1.

Mittels der Geschwindigkeit v und des Abstands x zwischen den Sensorgruppen lässt sich die Zeitspanne $\Delta t = t_1 - t_3 = x / v$ bestimmen, die das Fahrzeug 1 benötigt, bis die Sensoren (3.1, 3.2) der zweiten Sensorgruppe den Armierungsstab 7 detektieren, nachdem der Armierungsstab 7 von den Sensoren (2.1, 2.2) der ersten Sensorgruppe detektiert wurde.

Erfassen die Sensoren (2.1, 2.2) der ersten Sensorgruppe den Armierungsstab 7 gleichzeitig, aber die Sensoren (3.1, 3.2) der zweiten Sensorgruppe erfassen den Armierungsstab 7 zeitversetzt so wurde die Fahrtrichtung 9 des Fahrzeuges 1 während der Zeitspanne $\Delta t$ verändert.

Weicht die Zeit $t_3$ von dem mittels $\Delta t$ berechneten Wert für $t_3$ ab, so wurde die Geschwindigkeit v fehlerhaft bestimmt oder die Geschwindigkeit v wurde während der Zeitspanne $\Delta t$ verändert.

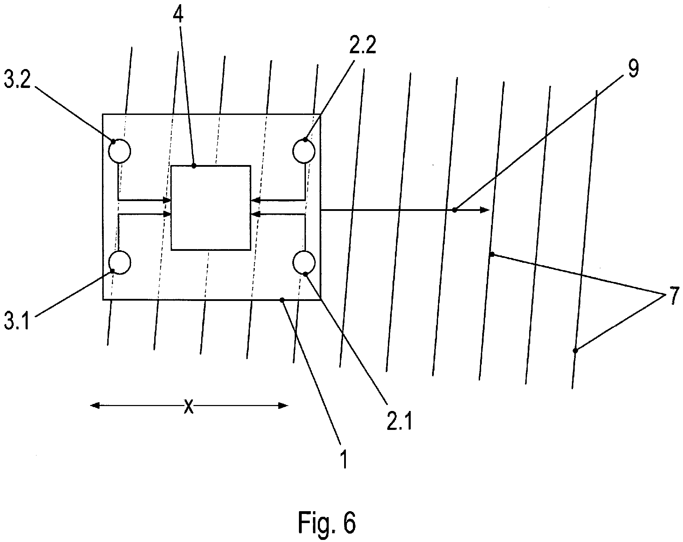

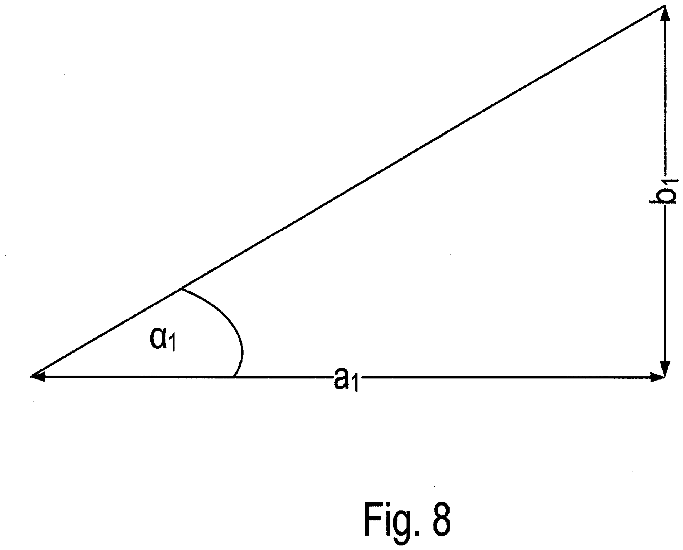

In den Figuren 6 bis 8 ist das zweite Anwendungsbeispiel des erfindungsgemäßen Systems gezeigt. Dabei ist das Fahrzeug 1 derart auf dem Betonboden ausgerichtet, dass die Referenzlinien 6 der Sensorgruppen in einem nichtverschwindenden Winkel $\alpha$ zu einem Armierungsstab 7 angeordnet sind. Vorzugsweise weist die Armierung eine Vielzahl von parallel angeordneten Armierungsstäben 7 auf.

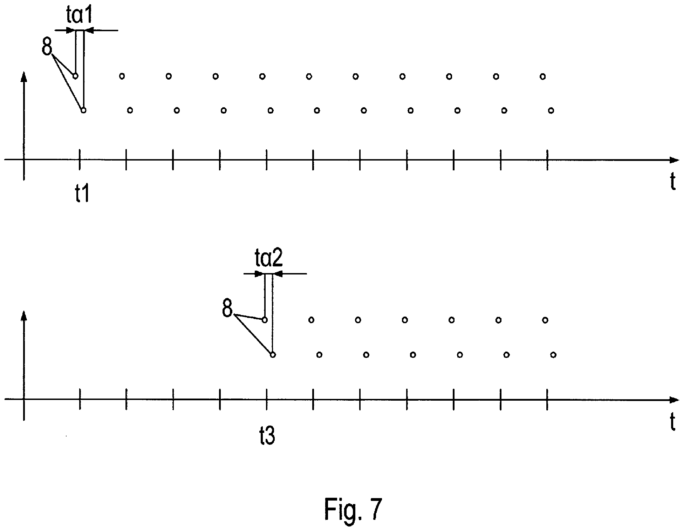

In Figur 7 sind im oberen Diagramm die Messpunkte der ersten Sensorgruppe und im unteren Diagramm sind die Messpunkte der zweiten Sensorgruppe als Funktion der Zeit t dargestellt. Dabei zeigt die jeweilige obere Messreihe die Messpunkte des jeweiligen ersten Sensors (2.1, 3.1) der jeweiligen Sensorgruppe und die untere Messreihe zeigt die jeweiligen Messpunkte des jeweiligen zweiten Sensors (2.2, 3.2) der jeweiligen Sensorgruppe.

Vorzugsweise erfasst der Geschwindigkeitssensor die Geschwindigkeit v des Fahrzeugs 1.

Der erste und der zweite Sensor (2.1, 2.2) der ersten Sensorgruppe detektieren den Armierungsstab 7 um $t_{\alpha1}$ zeitversetzt. Mittels der Zeitdifferenz $t_{\alpha1}$, der Geschwindigkeit v und des Abstands $a_1$ zwischen dem ersten Sensor 2.1 und dem zweiten Sensor 2.2 der ersten Sensorgruppe berechnet sich der Winkel $\alpha_1$ zwischen der Referenzlinie 6 der ersten Sensorgruppe und dem Armierungsstab 7 folgendermaßen:

$$\alpha_1 = \arctan \frac{b_1}{a_1} = \arctan \frac{v \cdot t_{\alpha1}}{a_1}$$

Dabei ist $b_1 = v \cdot t_{\alpha1}$ die von dem Fahrzeug 1 in dem Zeitdifferenz $t_{\alpha1}$ zurückgelegte Strecke $b_1$.

Der erste und der zweite Sensor (3.1, 3.2) der zweiten Sensorgruppe detektieren den Armierungsstab 7 um $t_{\alpha2}$ zeitversetzt. Mittels der Zeitdifferenz $t_{\alpha2}$, der Geschwindigkeit v und des Abstands $a_2$ zwischen dem ersten Sensor 3.1 und dem zweiten Sensor 3.2 der zweiten Sensorgruppe berechnet sich der Winkel $\alpha_2$ zwischen der Referenzlinie 6 der zweiten Sensorgruppe und dem Armierungsstab 7 folgendermaßen:

$$\alpha_2 = \arctan \frac{b_2}{a_2} = \arctan \frac{v \cdot t_{\alpha2}}{a_2}$$

Dabei ist $b_2 = v \cdot t_{\alpha2}$ die von dem Fahrzeug 1 in der Zeitdifferenz $t_{\alpha2}$ zurückgelegte Strecke $b_2$.

Sind $\alpha_1$ und $\alpha_2$ gleich, so ist die Fahrtrichtung 9 des Fahrzeugs relativ zur Armierung in der Zeit $\Delta t$ unverändert geblieben.

Sind $\alpha_1$ und $\alpha_2$ ungleich, so ist die Fahrtrichtung 9 des Fahrzeugs relativ zur Armierung in der Zeit $\Delta t$ verändert worden.

Vorzugsweise weist jede Sensorgruppe eine Vielzahl von Sensoren (2.1, 2.2, 3.1, 3.2) auf, die jeweils auf einer jeweiligen Referenzlinie 6 angeordnet sind. Mittels der Vielzahl von Sensoren (2.1, 2.2, 3.1, 3.2) sind Signale von anderen Armierungsstäben, die den Armierungsstab 7 kreuzen, herausmittelbar. Beispielsweise wird ein Sensor, der permanent einen den Armierungsstab 7 kreuzenden Armierungsstab detektiert, bei der Berechnung der Winkel $\alpha_1$ und $\alpha_2$ nicht berücksichtigt.

Für den weiteren Anwendungsfall, dass das Fahrzeug 1 wiederholt die gleiche Fahrstrecke fahren soll, führt das Fahrzeug 1 eine Referenzfahrt mit konstanter Geschwindigkeit durch und bestimmt entlang der gesamten Fahrstrecke Messpunkte mittels eines der Sensoren (2.1, 2.2, 3.1, 3.2). Mittels der Messpunkte der Referenzfahrt wird ein Referenzprofil bestimmt. Das Referenzprofil gibt für jede Position auf der Fahrstrecke eine Intensität des Signals von der Armierung an.

Aus den Intensitätsmaxima des Referenzprofils sind die Abstände zwischen den Armierungsstäben 7 bestimmbar. Somit ist während der Fahrt die Geschwindigkeit des Fahrzeugs 1 statt mittels des Geschwindigkeitssensors aus der Zeit zwischen zwei Intensitätsmaxima bestimmbar. Vorzugsweise wird dazu auch die Position des Fahrzeugs 1 auf der Fahrstrecke bestimmt.

Zur Bestimmung der Position des Fahrzeugs 1 auf der Fahrstrecke werden mittels des Sensors (2.1, 2.2, 3.1, 3.2), der während der Referenzfahrt benutzt wurde, Messpunkte eines Profilabschnitts bestimmt. Dieser Profilabschnitt wird von dem Auswertemittel 4 mit dem Referenzprofil verglichen, insbesondere mittels eines Korrelationsverfahrens. Stimmt der Profilabschnitt mit einem Abschnitt des Referenzprofils eindeutig überein, so ist jeder Messpunkt des Profilabschnitts einer Position auf der Fahrstrecke eindeutig zuordenbar.

Die aktuelle Position des Fahrzeugs 1 wird bestimmt durch den Vergleich eines aktuellen Messpunktes mit dem Profilabschnitt und dem zugeordneten Abschnitt des Referenzprofils.

## Bezugszeichenliste

1 Fahrzeug
2.1 erster Sensor der ersten Sensorgruppe
2.2 zweiter Sensor der ersten Sensorgruppe
3.1 erster Sensor der zweiten Sensorgruppe
3.2 zweiter Sensor der zweiten Sensorgruppe
4 Auswertemittel
5 Verbindungsmittel
6 Referenzlinie
7 Armierungsstab
8 Messpunkt
9 Fahrtrichtung
$\alpha$ Winkel
a Abstand
$b_1$ Strecke
x Abstand

## Patentansprüche

1. Verfahren zur Bestimmung der Fahrtrichtung (9) eines Fahrzeugs (1), mittels eines Systems zur Bestimmung der Fahrtrichtung eines Fahrzeugs wobei das Fahrzeug (1) auf einem Betonboden verfahrbar angeordnet ist, wobei der Betonboden zumindest einen Armierungsstab (7) aufweist, wobei das Fahrzeug (1) zumindest einen ersten Sensor (2.1) und einen zweiten Sensor (2.2) einer ersten Sensorgruppe aufweist, die entlang einer ersten Referenzlinie (6) um einen Abstand $a_1$ beabstandet voneinander angeordnet sind, **dadurch gekennzeichnet, dass die Fahrtrichtung so lange als parallel zum Armierungsstab (7) gilt oder einem anderen vorgegebenen Anfangs-Richtungswinkelwert zugeordnet ist, bis** das Fahrzeug (1) mit einer Geschwindigkeit v über den Armierungsstab (7) fährt, wobei der erste Sensor (2.1) den Armierungsstab (7) zu einem ersten Zeitpunkt $t_1$ erfasst, wobei der zweite Sensor (2.2) den Armierungsstab (7) zu einem zweiten Zeitpunkt $t_2$, insbesondere zeitlich nach dem ersten Zeitpunkt $t_1$, erfasst, wobei die Zeitdifferenz $t_{\alpha1}$ zwischen dem ersten Zeitpunkt $t_1$ und dem zweiten Zeitpunkt $t_2$ bestimmt wird, wobei aus der Zeitdifferenz $t_{\alpha1}$, der Geschwindigkeit v und dem Abstand $a_1$ ein Winkel $\alpha_1$ bestimmt wird, der den Winkel zwischen der Fahrtrichtung (9) des Fahrzeugs (1) und der Erstreckungsrichtung des Armierungsstabes (7) zum ersten und/oder zweiten Zeitpunkt angibt, oder die Fahrtrichtung als parallel zum Armierungsstab (7) bestimmt wird.

2. Verfahren nach Anspruch 1, **dadurch gekennzeichnet, dass** das Fahrzeug (1) mit konstanter Geschwindigkeit v fährt, wobei der Winkel $\alpha_1$ folgendermaßen berechnet wird:

$$\alpha_1 = \arctan \frac{v \cdot t_{\alpha1}}{a_1}$$

3. Verfahren nach einem der Ansprüche 1 oder 2, **dadurch gekennzeichnet, dass** das Fahrzeug (1) eine zweite Sensorgruppe aufweist, wobei die zweite Sensorgruppe zumindest zwei Sensoren (3.1, 3.2) aufweist, die entlang einer zweiten Referenzlinie (6) um einen Abstand $a_2$ beabstandet voneinander angeordnet sind, wobei die erste Sensorgruppe und die zweite Sensorgruppe derart angeordnet sind, dass die erste Referenzlinie (6) und die zweite Referenzlinie (6) parallel zueinander angeordnet sind und um den Abstand x beabstandet voneinander sind,

wobei ein erster Sensor (3.1) der zweiten Sensorgruppe den Armierungsstab (7) zu einem dritten Zeitpunkt $t_3$ zeitlich nach dem zweiten Zeitpunkt $t_2$ erfasst,

wobei ein zweiter Sensor (3.2) der zweiten Sensorgruppe den Armierungsstab (7) zu einem vierten Zeitpunkt $t_4$, insbesondere zeitlich nach dem dritten Zeitpunkt $t_3$, erfasst,

wobei die Zeitdifferenz $t_{\alpha 2}$ zwischen dem dritten Zeitpunkt $t_3$ und dem vierten Zeitpunkt $t_4$ bestimmt wird,

wobei aus der Zeitdifferenz $t_{\alpha 2}$, der Geschwindigkeit $v$ und dem Abstand $a_2$ ein Winkel $\alpha_2$ bestimmt wird, der den Winkel zwischen der Fahrtrichtung (9) des Fahrzeugs (1) und der Erstreckungsrichtung des Armierungsstabes (7) zum dritten und/oder vierten Zeitpunkt angibt.

4. Verfahren nach Anspruch 3,
   **dadurch gekennzeichnet, dass**
   das Fahrzeug (1) mit konstanter Geschwindigkeit $v$ fährt,

   wobei der Winkel $\alpha_2$ folgendermaßen berechnet wird:

   $$\alpha_2 = \arctan \frac{v \cdot t_{\alpha 2}}{a_2}.$$

5. Verfahren nach Anspruch 3 oder 4,
   **dadurch gekennzeichnet, dass**
   das Fahrzeug (1) die Differenz der Winkel $\alpha_1$ und $\alpha_2$ zur Steuerung des Fahrzeugs (1) verwendet,

   wobei die Differenz der Winkel $\alpha_1$ und $\alpha_2$ eine Richtungsänderung der Fahrtrichtung (9) während der zurückgelegten Strecke x angibt, also einen Lenkwinkel,

   insbesondere

   - wobei mittels eines Reglers des Fahrzeugs der so bestimmte Lenkwinkel auf einen Sollwert hin geregelt wird, indem ein Lenkantrieb des Fahrzeugs entsprechend gestellt wird,
   und/oder
   - der bestimmte Lenkwinkel auf unzulässige Überschreitung eines vorgebbaren Grenzwertes überwacht wird.

6. Verfahren nach mindestens einem der Ansprüche 3 bis 5,
   **dadurch gekennzeichnet, dass**
   die Zeitspanne Δt mittels der Geschwindigkeit $v$ und des Abstands x zwischen den Sensorgruppen folgendermaßen berechnet wird:

$$\Delta t = \frac{x}{v},$$

wobei

$$t_1 - t_3 - \Delta t \leq S,$$

wobei S ein vorgebbarer Schwellwert ist, insbesondere wobei der Schwellwert betragsmäßig weniger als ein Fünftel oder weniger als ein Zwanzigstel der Zeitspanne Δt beträgt.

7. Verfahren zur Bestimmung der Fahrtrichtung (9) eines Fahrzeugs (1) nach mindestens einem der Ansprüche 1 bis 6,
   **dadurch gekennzeichnet, dass**
   zur Bestimmung der Geschwindigkeit des Fahrzeugs (1) entlang einer Fahrstrecke die folgenden zeitlich aufeinander folgenden Verfahrensschritte ausgeführt werden:

   wobei in einem ersten Verfahrensschritt das Fahrzeug (1) eine Referenzfahrt mit konstanter Geschwindigkeit entlang der Fahrstrecke ausführt, wobei einer der Sensoren (2.1, 2.2, 3.1, 3.2) entlang der Fahrstrecke Messpunkte aufnimmt, wobei jeder Messpunkt einer Position auf der Fahrstrecke ein Signal einer Anordnung von Armierungsstäben im Betonboden zuordnet,

   wobei in einem zweiten Verfahrensschritt aus den während der Referenzfahrt ermittelten Messpunkten ein Referenzprofil der Fahrstrecke bestimmt wird,

   wobei in einem dritten Verfahrensschritt das Fahrzeug (1) entlang der Fahrstrecke fährt und mittels des während der Referenzfahrt verwendeten Sensors (2.1, 2.2, 3.1, 3.2) weitere Messpunkte aufnimmt,

   wobei in einem vierten Verfahrensschritt aus den weiteren Messpunkten ein Profilabschnitt bestimmt wird,

   wobei in einem fünften Verfahrensschritt der Profilabschnitt einem Abschnitt des Referenzprofils eindeutig zugeordnet wird, insbesondere mittels eines Korrelationsverfahrens,

   wobei in einem sechsten Verfahrensschritt mittels des dem Referenzprofil zugeordneten Profilabschnitts dem Fahrzeug Positionen auf der Fahrstrecke eindeutig zugeordnet werden,

   wobei in einem siebten Verfahrensschritt aus den Positionen auf der Fahrstrecke und der Zeitspanne zwischen den Messpunkten dieser Positionen die Geschwindigkeit des Fahrzeugs (1) bestimmt wird.

**8.** System **zur Durchführung eines Verfahrens nach Anspruch 1 bis 7, nämlich zur** Bestimmung der Fahrtrichtung (9) eines Fahrzeugs (1), **dadurch gekennzeichnet, dass**

das System das Fahrzeug (1) und einen Betonboden, aufweisend zumindest einen Armierungsstab (7), aufweist,

wobei das Fahrzeug (1) verfahrbar auf dem Betonboden angeordnet ist,

wobei das Fahrzeug (1) ein Auswertemittel (4) und eine erste Sensorgruppe, aufweisend zumindest zwei Sensoren (2.1, 2.2), aufweist,

wobei die Sensoren (2.1, 2.2) entlang einer ersten Referenzlinie (6) beabstandet voneinander angeordnet sind,

wobei die Sensoren (2.1, 2.2) zur Erfassung des Armierungsstabes (7) eingerichtet sind,

wobei das Auswertemittel (4) mit den Sensoren (2.1, 2.2) verbunden ist und zur Bestimmung der Fahrtrichtung (9) aus den Signalen der Sensoren (2.1, 2.2) eingerichtet ist.

**9.** System zur Bestimmung der Fahrtrichtung (9) eines Fahrzeugs (1) nach Anspruch 8, **dadurch gekennzeichnet, dass**

das Fahrzeug (1) eine zweite Sensorgruppe, aufweisend zumindest zwei Sensoren (3.1, 3.2), aufweist,

wobei die Sensoren (3.1, 3.2) der zweiten Sensorgruppe entlang einer zweiten Referenzlinie (6) beabstandet voneinander angeordnet sind,

wobei die erste Referenzlinie (6) und die zweite Referenzlinie (6) beabstandet voneinander und parallel zueinander angeordnet sind,

wobei die Sensoren (3.1, 3.2) der zweiten Sensorgruppe zur Erfassung des Armierungsstabes (7) eingerichtet sind,

wobei das Auswertemittel (4) mit den Sensoren (3.1, 3.2) der zweiten Sensorgruppe verbunden ist und zur Bestimmung der Fahrtrichtung (9) aus den Signalen der Sensoren (3.1, 3.2) der zweiten Sensorgruppe eingerichtet ist.

**10.** System zur Bestimmung der Fahrtrichtung (9) eines Fahrzeugs (1) nach mindestens einem der vorangegangenen Ansprüche, **dadurch gekennzeichnet, dass**

die Sensoren (2.1, 2.2, 3.1, 3.2) an einem Fahrzeugboden des Fahrzeugs (1) angeordnet sind, und/oder dass

die Sensoren (2.1, 2.2, 3.1, 3.2) Radarsensoren und/oder induktive Sensoren sind, die dazu eingerichtet sind, die Dicke und/oder die Dichte und/oder die Tiefe des Armierungsstabes (7) im Betonboden zu bestimmen.

**11.** System einem der Ansprüche 8 oder 9, **dadurch gekennzeichnet, dass**

das Fahrzeug (1) eine Fahrzeugsteuerung aufweist, insbesondere wobei das Fahrzeug (1) als fahrerloses Transportfahrzeug ausgeführt ist,

wobei die Fahrzeugsteuerung mit dem Auswertemittel (4) verbunden ist.

**12.** System einem der Ansprüche 8 bis 10, **dadurch gekennzeichnet, dass**

das Auswertemittel (4) eine Recheneinheit aufweist, die zur Berechnung von trigonometrischen Funktionen eingerichtet ist,

und/oder dass

das Auswertemittel (4) ein Zeitmessmittel aufweist, das zur Bestimmung der Zeit zwischen zwei Erfassungen des Armierungsstabs (7) eingerichtet ist, insbesondere zur Bestimmung der Zeit zwischen dem Zeitpunkt der Erfassung des Armierungsstabes (7) durch den ersten Sensor und dem Zeitpunkt der Erfassung des Armierungsstabes (7) durch den zweiten Sensor.

**13.** System einem der Ansprüche 8 bis 12, **dadurch gekennzeichnet, dass**

das System einen Geschwindigkeitssensor aufweist zur Bestimmung der Geschwindigkeit v des Fahrzeugs (1) in Fahrtrichtung (9).

**14.** System einem der Ansprüche 8 bis 13, **dadurch gekennzeichnet, dass**

der Betonboden eine Vielzahl von Armierungsstäben (7) aufweist,

insbesondere wobei die Armierungsstäbe (7) parallel zueinander und/oder als Gitter angeordnet sind.

**15.** System einem der Ansprüche 8 bis 14, **dadurch gekennzeichnet, dass**

jede Sensorgruppe eine Vielzahl von Sensoren (2.1, 2.2, 3.1, 3.2) aufweist,

wobei das Auswertemittel (4) zur Auswertung der Signale der Sensoren (2.1, 2.2, 3.1, 3.2) der ersten und zweiten Sensorgruppe eingerichtet ist,

insbesondere wobei das Auswertemittel (4) zur Auswahl von einzelnen Sensoren aus einer Sensorgruppe für die Bestimmung der Fahrtrichtung (9) des Fahrzeugs (1) eingerichtet ist.

**Claims**

**1.** Method for determining the direction of travel (9) of a vehicle (1) by means of a system for determining the direction of travel of a vehicle,

wherein the vehicle (1) is movably arranged on a concrete floor,

wherein the concrete floor comprises at least one reinforcing bar (7),

wherein the vehicle (1) comprises at least one first sensor (2.1) and a second sensor (2.2) of a first sensor group, which are arranged along a first reference line (6) at a distance $a_1$ from each other,
**characterised in that**
the direction of travel is deemed parallel to the reinforcing bar (7), or assigned to a different predetermined initial direction-angle value, until such a point as the vehicle (1) travels at a velocity v over the reinforcing bar (7),
wherein the first sensor (2.1) detects the reinforcing bar (7) at a first instant $t_1$,
wherein the second sensor (2.2) detects the reinforcing bar (7) at a second instant $t_2$, in particular temporally after the first instant $t_1$,
wherein the time difference $t_{\alpha 1}$ between the first instant $t_1$ and the second instant $t_2$ is determined,
wherein an angle $\alpha_1$ is determined from the time difference $t_{\alpha 1}$, the velocity v and the distance $a_1$, said angle indicating the angle between the direction of travel (9) of the vehicle (1) and the extent direction of the reinforcing bar (7) at the first and/or second instant,
or the direction of travel is determined as being parallel to the reinforcing bar (7).

2. Method according to claim 1,
**characterised in that**
the vehicle (1) travels at a constant velocity v,
wherein the angle $\alpha_1$ is calculated as follows:

$$\alpha_1 = \arctan \frac{v \cdot t_{\alpha 1}}{a_1}$$

3. Method according to any of claims 1 or 2,
**characterised in that**
the vehicle (1) comprises a second sensor group, wherein the second sensor group comprises at least two sensors (3.1, 3.2) which are arranged along a second reference line (6) at a distance $a_2$ from each other,
wherein the first sensor group and the second sensor group are arranged such that the first reference line (6) and the second reference line (6) are arranged in parallel with one another and are spaced apart from one another by the distance x,
wherein a first sensor (3.1) of the second sensor group detects the reinforcing bar (7) at a third instant $t_3$, temporally after the second instant $t_2$,
wherein a second sensor (3.2) of the second sensor group detects the reinforcing bar (7) at a fourth instant $t_4$, in particular temporally after the third instant $t_3$,
wherein the time difference $t_{\alpha 2}$ between the third instant $t_3$ and the fourth instant $t_4$ is determined,
wherein an angle $\alpha_2$ is determined from the time difference $t_{\alpha 2}$, the velocity v and the distance $a_2$, said angle indicating the angle between the direction of travel (9) of the vehicle (1) and the extent direction of the reinforcing bar (7) at the third and/or fourth instant.

4. Method according to claim 3,
**characterised in that**
the vehicle (1) travels at a constant velocity v,
wherein the angle $\alpha_2$ is calculated as follows:

$$\alpha_2 = \arctan \frac{v \cdot t_{\alpha 2}}{a_2}$$

5. Method according to either claim 3 or claim 4,
**characterised in that**
the vehicle (1) uses the difference between the angles $\alpha_1$ and $\alpha_2$ to steer the vehicle (1), wherein the difference between the angles $\alpha_1$ and $\alpha_2$ indicates a directional change in the direction of travel (9) during the path x covered, i.e. a steering angle, in particular

- wherein the steering angle thus determined is controlled towards a setpoint by means of a controller of the vehicle by adjusting a steering drive of the vehicle accordingly
and/or
- the determined steering angle is monitored for going beyond a predeterminable threshold in an unallowable manner.

6. Method according to at least one of claims 3 to 5,
**characterised in that**
by means of the velocity v and the distance x between the sensor groups, the time period $\Delta t$ is calculated as follows:

$$\Delta t = \frac{x}{v},$$

where

$$t_1 - t_3 - \Delta t \le S,$$

where S is a predeterminable threshold value, in particular wherein the magnitude of the threshold value is less than one fifth or less than one twentieth of the time period $\Delta t$.

7. Method for determining the direction of travel (9) of a vehicle (1) according to at least one of claims 1 to 6,
**characterised in that**
to determine the velocity of the vehicle (1) along a route, the following successive method steps are executed:

wherein in a first method step the vehicle (1) executes a reference journey at a constant velocity along the route, wherein one of the sensors (2.1, 2.2, 3.1, 3.2) records measurement points along the route, wherein each measurement point of a position on the route assigns a signal to an arrangement of reinforcing bars in the concrete floor,

wherein in a second method step a reference profile of the route is determined from the measurement points identified during the reference journey,

wherein in a third method step the vehicle (1) travels along the route and records further measurement points by means of the sensor (2.1, 2.2, 3.1, 3.2) used during the reference journey,

wherein in a fourth method step a profile portion is determined from the further measurement points,

wherein in a fifth method step the profile portion is uniquely assigned to a portion of the reference profile, in particular by means of a correlation process,

wherein in a sixth method step positions on the route are uniquely assigned to the vehicle by means of the profile portion assigned to the reference profile,

wherein in a seventh method step the velocity of the vehicle (1) is determined from the positions on the route and the time period between the measurement points of those positions.

8. System for carrying out a method according to claims 1 to 7, namely for determining the direction of travel (9) of a vehicle (1),
   **characterised in that**
   the system comprises the vehicle (1) and a concrete floor, which comprises at least one reinforcing bar (7),
   wherein the vehicle (1) is movably arranged on the concrete floor,
   wherein the vehicle (1) comprises an analysis means (4) and a first sensor group comprising at least two sensors (2.1, 2.2),
   wherein the sensors (2.1, 2.2) are arranged at a distance from one another along a first reference line (6),
   wherein the sensors (2.1, 2.2) are configured to detect the reinforcing bar (7),
   wherein the analysis means (4) is connected to the sensors (2.1, 2.2) and is configured to determine the direction of travel (9) from the signals of the sensors (2.1, 2.2).

9. System for determining the direction of travel (9) of a vehicle (1) according to claim 8, **characterised in that**
   the vehicle (1) comprises a second sensor group comprising at least two sensors (3.1, 3.2), wherein the sensors (3.1, 3.2) of the second sensor group are arranged at a distance from one another along a second reference line (6),
wherein the first reference line (6) and the second reference line (6) are arranged at a distance from one another and in parallel with one another,
wherein the sensors (3.1, 3.2) of the second sensor group are configured to detect the reinforcing bar (7),
wherein the analysis means (4) is connected to the sensors (3.1, 3.2) of the second sensor group and is configured to determine the direction of travel (9) from the signals of the sensors (3.1, 3.2) of the second sensor group.

10. System for determining the direction of travel (9) of a vehicle (1) according to at least one of the preceding claims,
    **characterised in that**
    the sensors (2.1, 2.2, 3.1, 3.2) are arranged on a floor pan of the vehicle (1) and/or **in that**
    the sensors (2.1, 2.2, 3.1, 3.2) are radar sensors and/or inductive sensors that are configured to determine the thickness and/or the density and/or the depth of the reinforcing bar (7) in the concrete floor.

11. System according to any of claims 8 or 9,
    **characterised in that**
    the vehicle (1) comprises a vehicle controller, in particular wherein the vehicle (1) is configured as a driverless transportation vehicle,
    wherein the vehicle controller is connected to the analysis means (4).

12. System according to any of claims 8 to 10,
    **characterised in that**
    the analysis means (4) comprises a computation unit that is configured to calculate trigonometric functions and/or **in that**
    the analysis means (4) has a timer means that is configured to determine the time between two detections of the reinforcing bar (7), in particular to determine the time between the instant at which the reinforcing bar (7) is detected by the first sensor and the instant at which the reinforcing bar (7) is detected by the second sensor.

13. System according to any of claims 8 to 12,
    **characterised in that**
    the system comprises a velocity sensor for determining the velocity *v* of the vehicle (1) in the direction of travel (9).

14. System according to any of claims 8 to 13,
    **characterised in that**
    the concrete floor comprises a plurality of reinforcing bars (7),
    in particular wherein the reinforcing bars (7) are arranged in parallel with one another and/or as a grid.

**15.** System according to any of claims 8 to 14, **characterised in that** each sensor group comprises a plurality of sensors (2.1, 2.2, 3.1, 3.2), wherein the analysis means (4) is configured to analyse the signals of the sensors (2.1, 2.2, 3.1, 3.2) of the first and second sensor group, in particular wherein the analysis means (4) is configured to select individual sensors from a sensor group to determine the direction of travel (9) of the vehicle (1).

**Revendications**

**1.** Procédé de détermination de la direction (9) de déplacement d'un véhicule (1) au moyen d'un système affecté à la détermination de la direction de déplacement d'un véhicule, ledit véhicule (1) étant disposé sur un sol en béton, avec faculté de déplacement, lequel sol en béton est muni d'un moins une barre d'armature (7), sachant que le véhicule (1) est équipé d'au moins un premier capteur (2.1) et d'un second capteur (2.2) d'un premier groupe de détection, qui sont implantés le long d'une première ligne de référence (6) en étant espacés l'un de l'autre d'une distance $a_1$, **caractérisé par le fait que** la direction de déplacement est réputée parallèle à la barre d'armature (7), ou est associée à une autre valeur préétablie d'angle directionnel initial, jusqu'à ce que le véhicule (1) se déplace à une vitesse $v$ au-dessus de ladite barre d'armature (7), le premier capteur (2.1) détectant la barre d'armature (7) à un premier instant $t_1$, le second capteur (2.2) détectant ladite barre d'armature (7) à un deuxième instant $t_2$ succédant notamment audit premier instant $t_1$ dans le temps, la différence temporelle $t_{\alpha 1}$, entre ledit premier instant $t_1$ et ledit deuxième instant $t_2$, étant alors déterminée, sachant qu'un angle $\alpha_1$ indiquant, au premier instant et/ou au deuxième instant, l'angle entre la direction (9) de déplacement du véhicule (1) et la direction de l'étendue de la barre d'armature (7), est déterminé sur la base de ladite différence temporelle $t_{\alpha 1}$, de ladite vitesse v et de ladite distance $a_1$, ou bien que ladite direction de déplacement est déterminée comme étant parallèle à ladite barre d'armature (7).

**2.** Procédé selon la revendication 1, **caractérisé par le fait que** le véhicule (1) se déplace à vitesse v constante, l'angle $\alpha_1$ étant calculé comme suit :

$$\alpha_1 = \arctan \frac{v \cdot t_{\alpha 1}}{\alpha_1}$$

**3.** Procédé selon l'une des revendications 1 ou 2, **caractérisé par le fait que** le véhicule (1) est doté d'un second groupe de détection, lequel second groupe de détection comprend au moins deux capteurs (3.1, 3.2) qui sont implantés le long d'une seconde ligne de référence (6) en étant espacés l'un de l'autre d'une distance $a_2$, le premier groupe de détection et ledit second groupe de détection étant agencés de façon telle que la première ligne de référence (6) et ladite seconde ligne de référence (6) soient disposées parallèlement l'une à l'autre et soient espacées l'une de l'autre de la distance x, un premier capteur (3.1) du second groupe de détection détectant la barre d'armature (7) à un troisième instant $t_3$ succédant au deuxième instant $t_2$ dans le temps, un second capteur (3.2) dudit second groupe de détection détectant ladite barre d'armature (7) à un quatrième instant $t_4$ succédant notamment audit troisième instant $t_3$ dans le temps, la différence temporelle $t_{\alpha 2}$, entre ledit troisième instant $t_3$ et ledit quatrième instant $t_4$, étant alors déterminée, sachant qu'un angle $\alpha_2$ indiquant, au troisième instant et/ou au quatrième instant, l'angle entre la direction (9) de déplacement du véhicule (1) et la direction de l'étendue de la barre d'armature (7), est déterminé sur la base de ladite différence temporelle $t_{\alpha 2}$, de la vitesse v et de ladite distance $a_2$.

**4.** Procédé selon la revendication 3, **caractérisé par le fait que** le véhicule (1) se déplace à vitesse v constante, l'angle $\alpha_2$ étant calculé comme suit :

$$\alpha_2 = \arctan \frac{v \cdot t_{\alpha 2}}{\alpha_2}$$

**5.** Procédé selon la revendication 3 ou 4, **caractérisé par le fait que** le véhicule (1) utilise la différence entre les angles $\alpha_1$ et $\alpha_2$ pour la commande dudit véhicule (1), laquelle différence entre les angles $\alpha_1$ et $\alpha_2$ indique une variation de la direction de déplacement (9) au cours du trajet x parcouru, c'est-à-dire un angle de braquage, sachant notamment

- que l'angle de braquage ainsi déterminé est régulé pour prendre une valeur de consigne, au moyen d'un régulateur dudit véhicule, un entraînement de braquage dudit véhicule étant réglé en conséquence,
et/ou
- que ledit angle de braquage déterminé est surveillé quant à un dépassement inadmissible d'une valeur limite pouvant être préétablie.

**6.** Procédé selon au moins l'une des revendications 3 à 5,
**caractérisé par le fait que**
le laps de temps $\Delta t$ est calculé au moyen de la vitesse $v$ et de la distance $x$ entre les groupes de détection, de la façon suivante :

$$\Delta t = \frac{x}{v} ,$$

sachant que

$$t_1 - t_3 - \Delta t \le S,$$

$S$ étant une valeur de seuil pouvant être préétablie, sachant notamment que ladite valeur de seuil représente moins d'un cinquième ou moins d'un vingtième dudit laps de temps $\Delta t$.

**7.** Procédé conforme à au moins l'une des revendications 1 à 6, affecté à la détermination de la direction (9) de déplacement d'un véhicule (1),
**caractérisé par le fait que**
les étapes opératoires mentionnées ci-après, se succédant mutuellement dans le temps, sont exécutées pour déterminer la vitesse du véhicule (1) le long d'un trajet de déplacement :

lors d'une première étape opératoire, le véhicule (1) effectue un parcours de référence à vitesse constante le long du trajet de déplacement, l'un des capteurs (2.1, 2.2, 3.1, 3.2) enregistrant alors des points de mesure le long dudit trajet de déplacement, chaque point de mesure d'un emplacement, sur ledit trajet de déplacement, affectant un signal à un ensemble de barres d'armature dans le sol en béton,
lors d'une deuxième étape opératoire, un profil de référence dudit trajet de déplacement est déterminé sur la base des points de mesure spécifiés pendant ledit parcours de référence,
lors d'une troisième étape opératoire, ledit véhicule (1) se déplace le long dudit trajet de déplacement et enregistre des points de mesure supplémentaires au moyen du capteur (2.1, 2.2, 3.1, 3.2) utilisé pendant ledit parcours de référence,

lors d'une quatrième étape opératoire, un segment de profil est déterminé sur la base desdits points de mesure supplémentaires,
lors d'une cinquième étape opératoire, ledit segment de profil est attribué de manière univoque à un segment dudit profil de référence, notamment au moyen d'un procédé de corrélation,
lors d'une sixième étape opératoire, des emplacements, sur ledit trajet de déplacement, sont affectés de manière univoque audit véhicule, au moyen dudit segment de profil attribué audit profil de référence,
lors d'une septième étape opératoire, la vitesse dudit véhicule (1) est déterminée sur la base desdits emplacements, sur ledit trajet de déplacement, et du laps de temps entre les points de mesure de ces emplacements.

**8.** Système dévolu à la mise en œuvre d'un procédé conforme à l'une des revendications 1 à 7, plus précisément affecté à la détermination de la direction (9) de déplacement d'un véhicule (1),
**caractérisé par le fait que**
ledit système inclut le véhicule (1) et un sol en béton pourvu d'un moins une barre d'armature (7),
ledit véhicule (1) étant disposé sur ledit sol en béton, avec faculté de déplacement,
lequel véhicule (1) comprend un moyen d'évaluation (4) et un premier groupe de détection équipé d'au moins deux capteurs (2.1, 2.2),
lesquels capteurs (2.1, 2.2) sont implantés avec espacement l'un de l'autre le long d'une première ligne de référence (6),
lesdits capteurs (2.1, 2.2) étant agencés en vue de la détection de ladite barre d'armature (7),
sachant que ledit moyen d'évaluation (4) est connecté aux capteurs (2.1, 2.2) et est agencé en vue de la détermination de la direction de déplacement (9) sur la base des signaux desdits capteurs (2.1, 2.2).

**9.** Système conforme à la revendication 8, affecté à la détermination de la direction (9) de déplacement d'un véhicule (1),
**caractérisé par le fait que**
le véhicule (1) comporte un second groupe de détection équipé d'au moins deux capteurs (3.1, 3.2),
les capteurs (3.1, 3.2) dudit second groupe de détection étant implantés avec espacement l'un de l'autre le long d'une seconde ligne de référence (6),
sachant que la première ligne de référence (6) et ladite seconde ligne de référence (6) sont espacées l'une de l'autre et sont disposées parallèlement l'une à l'autre,
lesdits capteurs (3.1, 3.2) dudit second groupe de détection étant agencés en vue de détecter la barre d'armature (7),
sachant que le moyen d'évaluation (4) est connecté auxdits capteurs (3.1, 3.2) du second groupe de détection et est agencé en vue de la détermination de la direction de déplacement (9) sur la base des signaux desdits capteurs (3.1, 3.2) dudit second groupe de détection.

10. Système conforme à au moins l'une des revendications précédentes, affecté à la détermination de la direction (9) de déplacement d'un véhicule (1), **caractérisé par le fait que**

les capteurs (2.1, 2.2, 3.1, 3.2) sont installés au niveau d'un plancher du véhicule (1) ; et/ou **par le fait que**

lesdits capteurs (2.1, 2.2, 3.1, 3.2) sont des capteurs radar et/ou des capteurs inductifs, agencés pour déterminer l'épaisseur et/ou la densité et/ou la profondeur de la barre d'armature (7) dans le sol en béton.

11. Système selon l'une des revendications 8 ou 9, **caractérisé par le fait que**

le véhicule (1) est équipé d'une commande, ledit véhicule (1) se présentant notamment comme un véhicule de transport sans conducteur,

ladite commande du véhicule étant connectée au moyen d'évaluation (4).

12. Système selon l'une des revendications 8 à 10, **caractérisé par le fait que**

le moyen d'évaluation (4) est doté d'une unité de calcul agencée en vue de calculer des fonctions trigonométriques ;

et/ou **par le fait que**

ledit moyen d'évaluation (4) est muni d'un moyen de chronométrage agencé en vue de la détermination du temps entre deux détections de la barre d'armature (7), notamment en vue de la détermination du temps entre l'instant de la détection de ladite barre d'armature (7) par le premier capteur, et l'instant de la détection de ladite barre d'armature (7) par le second capteur.

13. Système selon l'une des revendications 8 à 12, **caractérisé par le fait que**

ledit système est muni d'un capteur de vitesses, en vue de déterminer la vitesse v du véhicule (1) dans la direction de déplacement (9).

14. Système selon l'une des revendications 8 à 13, **caractérisé par le fait que**

le sol en béton compte une multiplicité de barres d'armature (7),

lesquelles barres d'armature (7) sont notamment disposées parallèlement les unes aux autres, et/ou agencées en treillis.

15. Système selon l'une des revendications 8 à 14, **caractérisé par le fait que**

chaque groupe de détection compte une multiplicité de capteurs (2.1, 2.2, 3.1, 3.2),

le moyen d'évaluation (4) étant agencé en vue d'évaluer les signaux des capteurs (2.1, 2.2, 3.1, 3.2) des premier et second groupes de détection,

sachant notamment que ledit moyen d'évaluation (4) est agencé en vue de la sélection de signaux individuels émanant d'un groupe de détection, pour la détermination de la direction (9) de déplacement du véhicule (1).

Fig. 1

Fig. 2

Fig. 3

Fig. 4

Fig. 5

EP 3 510 462 B1

Fig. 6

20

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005008555 A1
- WO 9109356 A1
- DE 10049402 A1
- US 32008532 A